# EUROPÄISCHE PATENTSCHRIFT

(11) **EP 3 955 529 B1**
(45) Veröffentlichungstag und Bekanntmachung des Hinweises auf die Patenterteilung: **22.01.2025**
(21) Anmeldenummer: 21186311.3
(22) Anmeldetag: 19.07.2021
(51) Int. Cl.: H04L 12/40

(54) **EINHEIT FÜR EIN BUSSYSTEM, MASTER-SLAVE-BUSSYSTEM MIT EINER VIELZAHL VON EINHEITEN UND VERFAHREN ZUR ADRESSIERUNG VON EINHEITEN EINES BUSSYSTEMS**
UNIT FOR A BUS SYSTEM, MASTER / SLAVE BUS SYSTEM WITH A PLURALITY OF UNITS AND METHOD FOR ADDRESSING UNITS OF A BUS SYSTEM
UNITÉ POUR UN SYSTÈME DE BUS, SYSTÈME DE BUS MAÎTRE-ESCLAVE DOTÉ D'UNE PLURALITÉ D'UNITÉS ET PROCÉDÉ D'ADRESSAGE DES UNITÉS D'UN SYSTÈME DE BUS

(30) Priorität: 13.08.2020 DE 102020121316
(43) Veröffentlichungstag der Anmeldung: 16.02.2022
(73) Patentinhaber: ebm-papst Mulfingen GmbH & Co. KG, 74673 Mulfingen (DE)
(72) Erfinder: Fessel, Andreas, 97990 Weikersheim (DE); Humm, Markus, 74679 Weißbach (DE)
(74) Vertreter: Staeger & Sperling Partnerschaftsgesellschaft mbB

(56) Entgegenhaltungen:
- EP-A1- 3 547 620
- DE-A1- 10 004 432
- DE-A1- 102016 103 928

## Beschreibung

Die Erfindung betrifft eine Einheit für ein Bussystem, ein Master-Slave-Bussystem umfassend eine Vielzahl solcher Einheiten als Slave-Einheiten sowie ein Verfahren zur Adressierung einer Vielzahl von Einheiten eines Bussystems.

Im Stand der Technik sind bereits seit langem verschiedenste Bussysteme mit ihren Komponenten sowie Verfahren zur Adressierung der Komponenten bekannt.

So zeigt beispielsweise die EP 3 547 620 A1 ein Master-Slave-Bussystem, bei welchem der Master über eine erste Busleitung mit einem übergeordneten Bus und über eine zweite Busleitung mit seinen Slaves verbunden ist.

Grundsätzlich gilt hierbei, dass es bei Master-Slave-basierten Bussystemen eine Master-Einheit bzw. einen Master und zumindest einen vorzugsweise jedoch eine Vielzahl von Slaves bzw. Slave-Einheiten gibt, welche durch den Master angesprochen, also gesteuert werden können. Dabei werden die Befehle bzw. Nachrichten des Masters über ein zumindest halbduplexfähiges Bussystem und eine Busleitung dieses Bussystems übermittelt, wobei die Befehle des Masters mit einer Adresse des zu steuernden Slaves an alle Slave-Einheiten des Systems übermittelt werden. Obgleich alle Slaves die Befehle erhalten bzw. "hören", nimmt nur der Slave den Befehl an bzw. führt diesen aus, welcher selbst die Adresse aufweist, welche mit dem Befehl übermittelt wurde.

Die Busleitung kann abhängig vom Bussystem mit Zwischensteckern versehen und vom Master zu einem ersten Slave und in Reihe von Slave zu Slave geführt werden. Alternativ ist auch ein Durchschleifen durch die Slaves möglich, bei welchen also jeweils eine Busleitung vom Master zu dem ersten Slave und dann von Slave zu Slave führt, wodurch sich ebenfalls eine Reihenschaltung der Slaves bzw. eine Bustopologie ergibt.

Da ein Befehl über die Busleitung vom Master an alle Slaves übermittelt wird, "hören" bzw. empfangen alle Slaves den Befehl, es soll jedoch nur der tatsächlich angesteuerte Slave reagieren. Daraus ergibt sich, dass dem Master die Adressen aller zu steuernden Slaves bekannt sein müssen und jeder Slave eine individuelle und innerhalb des Bussystems einzigartige Adresse besitzen muss.

Zur Zuweisung einer solchen Adresse kommen im Stand der Technik manuelle, halbautomatische und auch automatische Verfahren zum Einsatz, welche beispielsweise darauf basieren, dass die Adressen der Slaves in einer durch ihre Verbindung miteinander festgelegten Reihenfolge inkrementell erhöht werden, bis der letzte Slave der Reihe adressiert ist.

Das hat jedoch den Nachteil, dass die Adressen, die vergeben werden, vorbestimmt sind und einem festen Muster unterliegen. Es ist hierbei nicht möglich den Slaves "willkürliche" Adressen zuzuweisen, welche von dem vorbestimmten festen Muster abweichen.

Auch gibt es Varianten der Adressvergabe, bei welchen den Slaves durch eine am jeweiligen Slave manuell vorgenommene Parametrierung eine Adresse in einen Speicher geschrieben wird, was dann für jeden Slave wiederholt werden muss und wobei die Adressen zusätzlich auch dem Master mitgeteilt werden müssen, woraus sich ein hoher Aufwand ergibt.

Zudem sind auch Lösungen bekannt, welche auf einer von Slave zu Slave führenden Steuerleitung basieren, welche die Slaves bei einer Adressierung steuert, wobei hierbei oftmals vorgesehen ist, dass die Steuerleitung bzw. ein über die Steuerleitung übertragenes Signal in den Slaves beispielsweise gesteuert über einen Schalter durchgeschleift wird. Eine solche Ausführung hat jedoch den Nachteil, dass zwingend alle Slaves mittels der Steuerleitung verbunden sein müssen, was bei zueinander entfernten Slaves problematisch sein kann, und dass über die Steuerleitung oder das zugehörige Bussystem meist komplexe Befehle bzw. komplexe Signalfolgen übertragen werden müssen, um eine Adressierung zu steuern, so dass derartige Verfahren insgesamt einer hohen Komplexität unterliegen.

Der Erfindung liegt deshalb die Aufgabe zugrunde, die vorgenannten Nachteile zu überwinden und eine Slave-Einheit für ein Master-Slave-Bussystem, ein Master-Slave-Bussystem mit einer solchen Slave-Einheit sowie ein Verfahren zur Adressvergabe in einem eine Vielzahl von Slave-Einheiten aufweisenden Master-Slave-Bussystem bereitzustellen, durch welche eine flexible und zugleich einfache Adressvergabe bzw. Adresszuweisung der Slave-Einheiten möglich ist.

Diese Aufgabe wird durch die Merkmalskombination gemäß Patentanspruch 1 gelöst.

Erfindungsgemäß wird eine Einheit für ein Bussystem vorgeschlagen, wobei es sich bei der Einheit um eine Slave-Einheit eines Master-Slave-Bussystems handelt. Die Einheit weist erfindungsgemäß eine Busschnittstelle, einen Steuereingang zum Empfang eines eingangsseitigen Signals und einen Steuerausgang zum Senden eines ausgangsseitigen Signals auf. Der Steuereingang ist mit einer Eingangs-Schaltung zur Verarbeitung des eingangsseitigen Signals verbunden und der Steuerausgang ist mit einer Ausgangs-Schaltung zur Erzeugung des ausgangsseitigen Signals verbunden. Ferner weist die Einheit einen Adressspeicher auf, welcher ausgebildet ist, eine kollektive, also für alle Einheiten eines Bussystems identische, und vorzugsweise unveränderliche Broadcast-Adresse und eine individuelle Einheiten-Adresse zu speichern. Ferner kann der Adressspeicher ausgebildet sein zusätzlich eine kollektive und somit für alle Einheiten identische Zuweisungs-Adresse zu speichern. Der Adressspeicher kann zudem verteilt angeordnet und durch verschiedene Speichertechnologien ausgebildet sein, so dass beispielsweise die Broadcast-Adresse und optional die Zuweisungs-Adresse unveränderlich in der Einheit gespeichert sind/ist. Entsprechend kann die Broadcast-Adresse fest definiert sein. Beispielsweise ist für die Broadcast-Adresse die Adresse "0" und für die Zuweisungsadresse "247" unveränderlich festgelegt. Erfindungsgemäß ist zudem vorgesehen, dass die Ausgangs-Schaltung ausgebildet ist, das an dem Steuerausgang anliegende ausgangsseitige Signal aus einer Versorgungsspannung der Einheit oder aus einer externen Spannung zu erzeugen und somit nicht mit dem Steuereingang bzw. der Eingangs-Schaltung verbunden sein muss. Beispielsweise kann der Steuerausgang ein offener Kollektor bzw. ein Open-Collector-Ausgang sein oder die Ausgangsschaltung einen solchen umfassen, wobei die externe Spannung dann eine von einer nachfolgenden Einheit bezogene Spannung sein kann. Entsprechend ist die Ausgangs-Schaltung vorzugsweise ausgebildet, das an dem Steuerausgang anliegende ausgangsseitige Signal unabhängig bzw. nur abhängig von einer übergeordneten Steuerungslogik von dem eingangsseitigen Signal zu erzeugen, wobei die übergeordnete Steuerungslogik vorzugsweise ausgebildet ist, die in der Eingangs-Schaltung verarbeiteten eingangsseitigen Signale zu verarbeiten und abhängig von einer hinterlegten Logik die Ausgangs-Schaltung zu steuern.

Grundgedanke der Erfindung ist es hierbei, eine Einheit für ein Bussystem, ein Master-Slave-Bussystem sowie ein Verfahren zur Adressierung der Einheiten bereitzustellen, durch welche die Vergabe individueller Einheiten-Adressen für die Einheiten ermöglicht wird, wobei durch Nutzung eines Freigabesignals, welches jeweils von einer Einheit zu der jeweils folgenden Einheit weitergegeben wird, sich jeweils nur eine Einheit in einem Zuweisungsmodus befindet, in welchem der jeweils im Zuweisungsmodus befindlichen Einheit eine individuelle Einheiten-Adresse zugewiesen wird, so dass den Einheiten des Bussystems nacheinander in der Reihenfolge ihrer Verkabelung jeweils die eindeutige individuelle Adresse zuweisbar ist. Hierbei wird als Reihenfolge der Verkabeldung die Reihenfolge verstanden, welche durch die Steuerleitung bzw. durch die Vielzahl von Steuerleitungen festlegbar ist.

Vorzugsweise ist die Einheit, welche eine Slave-Einheit bzw. ein Slave ist, ausgebildet, sowohl auf einen an die kollektive Broadcast-Adresse gerichteten Befehl oder optional auf einen an die individuelle Einheiten-Adresse gerichteten Befehl zu reagieren, wobei durch einen an die Broadcast-Adresse gesendeten Befehl alle als Slaves dienenden mit einem Master verbundenen Einheiten eines Master-Slave-Bussystems reagieren. Ist eine Zuweisungs-Adresse vorgesehen, sind die Einheiten vorzugsweise ausgebildet zumindest in einem bestimmten Modus auf diese so zu reagieren, als wäre die Zuweisungsadresse eine individuelle Einheiten-Adresse. Bei der Übermittlung eines Befehls bzw. einer Nachricht an die Broadcast-Adresse wird seitens des Masters keine Antwort durch die Slaves erwartet. Abweichend davon ist vorzugsweise vorgesehen, dass nach dem Empfang eines an die individuelle Einheiten-Adresse gerichteten Befehls die jeweils angesprochene Einheit, welche diese Adresse aufweist, den Empfang des Befehls oder dessen Ver- oder Bearbeitung bestätigt oder abhängig vom Befehl eine entsprechende Rückantwort liefert.

Der Adressraum für die kollektive Broadcast-Adresse und die individuelle Einheiten-Adresse ist beispielsweise 0 bis 247, wobei zum Beispiel "0" als Broadcast-Adresse unveränderlich vorbestimmt sein kann und somit die Adressen 1 bis 247 für eine individuelle Adressierung verbleiben. Darüber hinaus kann es jedoch noch weitere Broadcast- oder andere spezielle Adressen, wie beispielsweise die Zuweisungs-Adresse, geben, auf welche die Slaves nur unter bestimmten Voraussetzungen, wie beispielsweise dem Betrieb in einem bestimmten Modus, wie einem Adressier- oder Zuweisungsmodus, reagieren.

Für Bussysteme, welche möglichst viele Einheiten aufweisen sollen, ist es daher vorteilhaft möglichst wenige Adressen durch solche Broadcast- oder andere spezielle Adressen zu blockieren, um dadurch möglichst vielen Einheiten Adressen aus dem vorhandenen Adressraum zuweisen zu können. Bei Bussystemen, welche für eine vorbestimmte oder allgemein geringere Anzahl von Einheiten ausgelegt bzw. vorgesehen sind, können jedoch zur Erhöhung der Sicherheit und zur Vereinfachung der Verfahren auch mehrere Broadcast- oder andere spezielle Adressen, wie die Zuweisungs-Adresse, verwendet werden. Ein in den Slaves eines solchen Bussystems vorhandener Adressspeicher ist entsprechend vorzugsweise ausgelegt, auch diese zusätzlichen Broadcast- und/oder speziellen Adressen zu speichern, wobei der Adressspeicher hierzu nicht als eine einzelne Einheit, sondern beispielsweise als ein fester Speicher und ein veränderlicher Speicher, ausgebildet sein kann und somit verteilt und teilweise unveränderlich ausgebildet sein kann.

Die Busschnittstelle weist zudem vorzugsweise einen Eingang und einen Ausgang auf, sodass als Busleitung beispielsweise mehrere Netzwerk- bzw. Ethernetkabel verwendet werden können, wobei jeweils ein Kabel zwei Einheiten miteinander verbindet und ein Kabel vom Master zu einer der Einheiten und vorzugsweise zu einer ersten Einheit einer Reihe von miteinander verbundenen Einheiten führt.

Eine vorteilhafte Variante der Einheit sieht vor, dass die Eingangs-Schaltung und die Ausgangs-Schaltung sowie der Steuereingang und der Steuerausgang schaltungstechnisch voneinander getrennt und/oder nur durch eine übergeordnete Schaltlogik miteinander verbunden sind. Entsprechend können die Eingangs-Schaltung und die Ausgangs-Schaltung unabhängig voneinander verwendet werden und abseits einer Adresszuweisung verschiedene andere Funktionen übernehmen. Auch kann ein Eingangssignal durch die Eingangs-Schaltung verarbeitet werden und über die Ausgangs-Schaltung ein Ausgangssignal bzw. ausgangsseitiges Signal gesendet werden, welches sich von dem Eingangssignal bzw. eingangsseitigen Signal unterscheidet. Sind der Steuereingang und der Steuerausgang bzw. deren jeweilige Schaltungen lediglich durch einen Schalter getrennt bzw. über einen Schalter verbunden, kann das Eingangssignal durch das Schließen des Schalters lediglich durchgeschleift werden, so dass eine Trennung des Steuereingangs und des Steuerausgangs im Vergleich zu einer Lösung mit durchgeschleiften oder lediglich durch ein Relais oder einen Schalter getrennten Kontakten eine große Flexibilität schafft.

Der Steuereingang ist in einer ersten vorteilhaften Variante ein Digital-Eingang und die Eingangs-Schaltung entsprechend ausgebildet, ein an dem Steuereingang anliegendes digitales Signal zu verarbeiten. Alternativ sieht eine zweite Variante vor, dass der Steuereingang ein Analog-Eingang ist und die Eingangs-Schaltung entsprechend ausgebildet ist, ein an dem Steuereingang anliegendes analoges Signal zu verarbeiten.

Ebenso ist der Steuerausgang in einer vorteilhaften Ausführung ein Digital-Ausgang und die Ausgangs-Schaltung ausgebildet, ein an dem Steuerausgang anliegendes digitales Signal zu erzeugen. Alternativ hierzu kann der Steuerausgang ein Analog-Ausgang und die Ausgangs-Schaltung ausgebildet sein, ein an dem Steuerausgang anliegendes analoges Signal zu erzeugen. Als Spezialfall eines Digital-Ausgangs wird zudem ein offener Kollektor verstanden, welcher auch als Open-Collector-Ausgang bezeichnet werden kann. Entsprechend kann der Steuerausgang alternativ ein offener Kollektor sein und die Ausgangs-Schaltung ausgebildet sein, ein an dem Steuerausgang anliegendes digitales Signal zu erzeugen, welches jedoch aus der an dem Ausgang anliegenden Spannung erzeugt wird. Ist, wie später erläutert, der Steuerausgang einer Einheit mit dem Steuereingang einer nachfolgenden Einheit verbunden, ist vorgesehen, dass der Open-Collector-Ausgang seine Versorgungsspannung von der nachfolgenden Einheit bezieht und dessen Eingangs-Schaltung (Digitaleingang) auf Masse zieht.

Handelt es sich beim dem Steuereingang um einen Digital-Eingang, ist der Steuerausgang vorzugsweise ein Digital-Ausgang, was ebenso für Analog-Eingang und Analog-Ausgang gilt. Durch eine schaltungstechnische Trennung von Steuereingang und Steuerausgang sind jedoch grundsätzlich auch Mischformen möglich, bei welchen er Steuereingang ein Digital-Eingang und der Steuerausgang ein Analog-Ausgang ist oder umgekehrt.

Entsprechend ist der Steuereingang vorzugsweise ausgebildet, ausschließlich ein Signal zu empfangen, und Steuerausgang vorzugsweise ausgebildet, ausschließlich ein Signal auszugeben bzw. zu senden. Da Steuereingang und Steuerausgang nicht vertauschbar bzw. universell verwendbar sind, sind auch die Eingangs-Schaltung vorzugsweise ausschließlich zur Verarbeitung des eingangsseitigen Signals und die Ausgangs-Schaltung vorzugsweise ausschließlich zur Erzeugung des ausgangsseitigen Signals ausgebildet.

Abhängig von einer Funktion des Steuereingangs und des Steuerausgangs, welche diese unabhängig von einer Adressierung der Einheiten erfüllen sollen, kann jedoch auch vorgesehen sein, dass die Ausgangs-Schaltung ausgebildet ist, das an dem Steuereingang anliegende eingangsseitige Signal steuerungstechnisch zu verarbeiten und darauf basierend das ausgangsseitige Signal zu erzeugen. Beispielsweise kann ein analoges eingangsseitiges Signal in ein ausgangsseitiges digitales Signal umgewandelt werden oder umgekehrt.

Vorteilhaft weist die Einheit bei einer Variante ferner einen vorzugsweise von einer Versorgungsspannung der Einheit gespeisten Spannungsausgang auf, wobei die Versorgungsspannung auf diesen durchgeschleift sein kann oder unmittelbar die Klemmen zur Spannungsversorgung der Einheit integral als Spannungsausgang genutzt werden können. Ein solcher Spannungsausgang ist beispielsweise zum Starten eines Adressierungsvorgangs unmittelbar mit dem Steuereingang verbindbar, da dadurch der Steuereingang der in der Reihe ersten Einheit versorgbar und dadurch die erste Einheit "markierbar" ist. Zudem kann durch ein Brücken des Spannungsausgangs mit dem Steuereingang das später näher erläuterte erfindungsgemäße Verfahren unmittelbar gestartet werden. Alternativ kann die Einheit einen solchen Spannungsausgang aufweisen, wobei vorgesehen ist, dass dieser über ein beispielsweise manuell oder elektrisch betätigbares Potentiometer oder über einen beispielsweise manuell oder elektrisch betätigbaren Schalter mit dem Steuereingang verbindbar oder verbunden ist. Ist ein solches Potentiometer oder ein solcher Schalter elektrisch betätigbar, ist ein solches Element vorzugsweise durch die Einheit bzw. durch einen vom Master an die Einheit gerichteten Befehl betätigbar und mithin von dem Master steuerbar. Dadurch kann beispielsweise die erste Einheit einer Reihe von miteinander verbundenen Einheiten "markiert" und ein Adressiervorgang durch Spannungsbeaufschlagung des Steuereingangs unabhängig vom Steuerausgang gestartet oder initialisiert werden. Durch das Verbinden des Spannungsausgangs mit dem Steuereingang und das Spannungs- bzw. Signalbeaufschlagen des Steuereingangs, dient dieses Signal als ein später erläutertes Freigabesignal, so dass eine Adressierung bzw. eine Zuweisung ausgelöst und der jeweilige Slave beispielsweise in den später weiter erläuterten Zuweisungsmodus geschalten werden kann. Dadurch ist es nicht zwingend erforderlich den Slave über den Steuereingang mit dem Master oder einem vorhergehenden Slave zu verbinden.

Ist ein elektrisch betätigbarer Schalter oder ein elektrisch betätigbares Potentiometer vorgesehen, kann ein Befehl zur Betätigung beispielsweise über die Busschnittstelle bzw. vom Master übermittelt werden. Hierbei muss dann entweder die Adresse des anzusteuernden Slaves bekannt sein, was meist nicht der Fall ist, oder der Spannungsausgang darf mit dem Steuereingang nur an einer Einheit einer Vielzahl von als Slaves vorgesehenen Einheiten eines Master-Slave-Systems gebrückt sein. Aus der zweiten Variante, bei welcher der Spannungsausgang beispielsweise nur bei der ersten Einheit einer Vielzahl von in Reihe verbundener Einheiten gebrückt ist, kann der Befehl zur Betätigung des Schaltens an die Broadcast-Adresse übermittelt werden, so dass der Schalter aller Einheiten betätigt wird, wobei dann der Steuereingang nur bei der ersten Einheit der Reihe mit dem Spannungsausgang verbunden ist bzw. verbunden sein darf, so dass der Befehl nur bei der ersten Einheit der Reihe zu einem Signal bzw. Freigabesignal an dem Steuereingang und somit zu einem Start der Adressierung führt.

Zur Adressierung der Einheit ist diese ferner ausgebildet,
- bei Empfang eines an die Broadcast-Adresse gerichteten Adressierbefehls über die Busschnittstelle oder eines anderen Signals aus einem Betriebsmodus in einen Adressiermodus zu schalten,
- in dem Adressiermodus mit der Ausgangs-Schaltung ein Sperrsignal zu erzeugen und das Sperrsignal an dem Steuerausgang als ausgangsseitiges Signal zu senden sowie bei Empfang eines Freigabesignals an dem Steuereingang aus dem Adressiermodus in einen Zuweisungsmodus zu schalten und vorzugsweise solange in dem Zuweisungsmodus zu bleiben, solange das Sperrsignal erzeugt bzw. als ausgangsseitiges Signal gesendet wird, wobei das Sperrsignal und das Freigabesignal jeweils beispielsweise ein vorbestimmter konstanter Spannungswert zwischen 0 und 10 V sein kann und der Spannungswert für Sperr- und Freigabesignal voneinander abweicht,
- in dem Zuweisungsmodus eine über die Busschnittstelle empfangene Adresse als individuelle Einheiten-Adresse in dem Adressspeicher zu speichern und nach Speicherung der Einheiten-Adresse aus dem Zuweisungsmodus in einen Wartemodus zu schalten, wobei vorzugsweise vorgesehen ist, dass die individuelle Einheiten-Adresse über die Busschnittstelle adressiert an die Broadcast-Adresse oder adressiert an die vorzugsweise kollektive Zuweisungs-Adresse an die Einheit übermittelt wird und wobei eine an die Zuweisungs-Adresse adressierte und die Adresse enthaltende Nachricht bzw. Befehl nur von einer Einheit im Zuweisungsmodus angenommen bzw. verarbeitet wird,
- in dem Wartemodus mit der Ausgangs-Schaltung ein Freigabesignal zu erzeugen und das Freigabesignal an dem Steuerausgangs als ausgangsseitiges Signal zu senden, wobei der Wartemodus entweder ein eigener und programmtechnisch vorgesehener Modus ist oder dem vorhergehenden Adressiermodus entspricht, welcher dann vorzugsweise ausgebildet ist, ein Umschalten von dem Adressiermodus in den Zuweisungsmodus nur zu erlauben, solange als ausgangsseitiges Signal kein Freigabesignal bzw. solange als ausgangsseitiges Signal ein Sperrsignal übermittelt wird.

Das Freigabesignal, welches über den Steuerausgang an eine nachfolgende Einheit gesendet werden kann, kann beim Wechsel vom Zuweisungsmodus in den Wartemodus bzw. zurück in den Adressiermodus automatisch oder alternativ nach Übermittlung eines entsprechenden Befehls über die Busschnittstelle erzeugt werden.

Um zu verhindern, dass einer Einheit, der bereits eine neue Einheiten-Adresse zugewiesen wurde, bei der Zuweisung von Adressen zu anderen Einheiten erneut bzw. versehentlich eine andere Adresse zugewiesen wird, ist vorzugsweise vorgesehen, dass die Einheit ferner eine Sperrschaltung aufweist. Die Einheit bzw. die Sperrschaltung ist ausgebildet, ein Schalten in den Zuweisungsmodus nur zuzulassen bzw. zu ermöglichen, wenn der Steuerausgang ein Sperrsignal sendet und an dem Steuereingang das Freigabesignal anliegt.

Ein weiterer Aspekt der Erfindung betrifft ein Master-Slave-Bussystem mit einem Master und einer Vielzahl von erfindungsgemäßen Einheiten als Slave-Einheiten, welche entsprechend nachfolgend als Slaves bezeichnet werden. Der Master bzw. die Master-Einheit ist durch zumindest eine Busleitung mit den Slaves der Vielzahl von Slaves verbunden. Jeweils zwei Slaves der Vielzahl von Slaves sind miteinander durch eine Steuerleitung verbunden, welche den Steuerausgang eines ersten Slaves mit dem Steuereingang eines zweiten Slaves verbindet, so dass die Slaves der Vielzahl von Slaves durch die jeweiligen Steuerleitungen miteinander in Reihe verbunden sind. Der Master ist entsprechend vorzugsweise ausgebildet, Befehle und insbesondere die Befehle gemäß dem erfindungsgemäßen Verfahren über die Busleitung an alle Einheiten oder gezielt an Einheiten mit individueller Einheiten-Adresse oder gezielt nur an freigegebene individuelle Einheiten zu senden.

Nicht zwingend erforderlich, jedoch für die Meldung einer vollständigen Adressierung aller Slaves des Master-Slave-Bussystem vorteilhaft, ist bei einer Variante des Master-Slave-Bussystems der Steuerausgang eines in der Reihe der miteinander verbundenen Slaves letzten Slaves mit dem Master bzw. mit einem dafür vorgesehenen Steuereingang des Masters durch eine weitere bzw. letzte Steuerleitung verbunden, welche alternativ auch als Rückmeldeleitung bezeichnet werden kann.

Um die Adressierung des Slaves durch die Adressierung des ersten Slaves der Reihe von Slaves nicht manuell oder durch eine entsprechende Verkabelung am ersten Slave starten zu müssen, sondern unmittelbar durch den Master starten zu können, ist der Master bzw. ein dafür vorgesehener Steuerausgang des Masters mit dem Steuereingang eines in der Reihe der miteinander verbundenen Slaves ersten Slaves durch eine weitere bzw. erste Steuerleitung verbunden, welche auch als Start- oder Initialleitung bezeichnet werden kann.

Ein weiterer Aspekt der Erfindung betrifft zudem ein Verfahren zur Adressierung einer Vielzahl von Einheiten, welche über zumindest eine Busleitung mit einem Master vorzugsweise in Reihe miteinander zu einem Bussystem verbunden sind, wobei es sich vorzugsweise um ein Master-Slave-Bussystem handelt, bei welchem die Einheiten als Slaves dienen. Die Einheiten entsprechen vorzugsweise den erfindungsgemäßen Einheiten bzw. das Bussystem dem erfindungsgemäßen Master-Slave-Bussystem. Hierbei ist vorgesehen, dass jede Einheit der Vielzahl von Einheiten jeweils eine Busschnittstelle zur Verbindung mit der Busleitung, einen Steuereingang zum Empfang eines eingangsseitigen Signals und einen Steuerausgang zum Senden eines ausgangsseitigen Signals aufweist. Der Steuereingang ist mit einer Eingangs-Schaltung zur Verarbeitung des eingangsseitigen Signals und der Steuerausgang mit einer Ausgangs-Schaltung zur Erzeugung des ausgangsseitigen Signals verbunden. Wie zuvor beschrieben, sind diese jedoch vorzugsweise schaltungstechnisch getrennt und nur über eine übergeordnete Steuerungslogik verbunden. Jede Einheit weist ferner einen Adressspeicher auf, welcher ausgebildet ist, eine vorzugsweise unveränderliche kollektive Broadcast-Adresse und eine veränderliche individuelle Einheiten-Adresse sowie optional eine vorzugsweise unveränderliche Zuweisungs-Adresse zu speichern. Ferner sind jeweils zwei Einheiten der Vielzahl von Einheiten miteinander durch eine Steuerleitung verbunden, welche den Steuerausgang einer vorausgehenden bzw. ersten Einheit mit dem Steuereingang einer nachfolgenden bzw. zweiten Einheit verbindet, so dass alle Einheiten der Vielzahl von Einheiten durch die jeweiligen Steuerleitungen von einer ersten Einheit bis zu einer letzten Einheit miteinander in Reihe verbunden sind. Optional können/kann zudem die erste Einheit der Reihe über ihren Steuereingang und/oder die letzte Einheit der Reihe über ihren Steuerausgang mit dem Master verbunden sein. Die Einheiten der Vielzahl von Einheiten können zu Beginn des Verfahrens unadressiert sein und entsprechend eine Default-Adresse oder eine beliebige unbekannte Adresse als individuelle Einheiten-Adresse aufweisen. Zu Beginn des Verfahrens können Adressen auch doppelt vergeben sein. Das vorgeschlagene Verfahren umfasst zumindest die folgenden Schritte:
a. Schalten der Einheiten von einem Betriebsmodus in einen Adressiermodus, wobei die Einheiten in dem Adressiermodus mit der Ausgangs-Schaltung ein Sperrsignal erzeugen und das Sperrsignal an dem Steuerausgang als ausgangsseitiges Signal senden, so dass das Sperrsignal an dem Steuereingang des in der Reihe nachfolgenden Einheiten anliegt. Vorzugsweise sind die Einheiten durch eine Sperrschaltung für die Dauer des Anliegens des Sperrsignals an ihrem jeweiligen Steuereingang für ein Schalten in einen Zuweisungsmodus gesperrt. Weiter vorzugsweise werden die Einheiten durch einen von dem Master an die Broadcast-Adresse gerichteten Befehl vom dem Betriebsmodus in den Adressiermodus geschalten.
b. Schalten der initialen, vorzugsweise ersten Einheit der in Reihe geschalteten Einheiten von dem Adressiermodus in einen Zuweisungsmodus durch Übermittlung eines Freigabesignals an den Steuereingang der Einheit, wobei die Einheit vorzugsweise nur in den Zuweisungsmodus geschalten werden kann, solange der Steuerausgang der Einheit ein Sperrsignal erzeugt bzw. sendet. Die Übermittlung des Freigabesignals an den Steuereingang der Einheit kann beispielsweise händisch bzw. manuell durch ein Brücken der Versorgungsspannung auf den Steuereingang oder, abhängig davon, ob der Steuereingang mit dem Master oder über einen Schalter mit der Versorgungsspannung verbunden ist, von dem Master gesteuert werden. Wird das Schalten der initialen, vorzugsweise ersten Einheit in den Zuweisungsmodus von dem Master gesteuert, übermittelt dieser ein Freigabesignal über die erste Steuerleitung. Ist der Steuereingang über einen Schalter mit der Versorgungsspannung verbunden und der Schalter elektronisch ansteuerbar, kann zudem ein Befehl beispielsweise an die Broadcast-Adresse zum Schließen des Schalters übermittelt werden, wobei dadurch nur an der ersten Einheit der Reihe ein Freigabesignal anliegt, da nur an der ersten Einheit der Reihe der Steuereingang mit dem Schalter verbunden ist. Sind Seriennummern der Einheiten bzw. speziell eine Seriennummer der ersten Einheit oder ein anderes eindeutiges Merkmal der ersten Einheit bekannt, kann zudem ein Befehl über das Bussystem übermittelt werden, welcher gezielt nur nach Vergleich und Übereinstimmung des eindeutigen Merkmals und somit ausschließlich von der ersten Einheit ausgeführt und die erste Einheit dadurch in den Zuweisungsmodus geschalten wird.
c. Zuweisen einer Adresse zu der sich im Zuweisungsmodus befindenden Einheit, durch Übermittlung einer eine Adresse enthaltenden Nachricht über die Busleitung an die Einheit und Speichern der Adresse als individuelle Einheiten-Adresse in dem Adressspeicher. Vorzugsweise ist vorgesehen, dass die Adresse, welche hier auch als neue Adresse bezeichnet werden kann, vom Master über die Busleitung an die Einheit übermittelt wird. Wie zuvor beschrieben, kann die Nachricht bzw. der Befehl des Masters an die Broadcast-Adresse adressiert sein, wobei dann die Einheit bzw. die Einheiten die Adresse nur Speichern, wenn sie sich im Zuweisungsmodus befinden. Alternativ kann die Nachricht bzw. der Befehl des Masters an die zuvor genannte Zuweisungs-Adresse adressiert sein, wobei nur die sich im Zuweisungsmodus befindende Einheit auf diese Zuweisungs- Adresse reagiert. Eine solche spezielle Adresse bzw. Zuweisungs-Adresse ist dann ähnlich der Broadcast-Adresse jeweils in dem Adressspeicher jeder Einheit hinterlegt und bei allen Einheiten identisch sowie vorzugsweise unveränderlich. Abweichend von der Broadcast-Adresse kann die angesprochene Einheit jedoch eine Antwort über die Busleitung an den Master senden, wobei dadurch, dass nur der eine sich im Zuweisungsmodus befindende Einheit antwortet, sichergestellt ist, dass nur eine Rückantwort einer Einheit erfolgt und nicht mehrere Einheiten eine Rückantwort senden.
d. Schalten der Einheit nach dem Speichern der Adresse von dem Zuweisungsmodus in einen Wartemodus, wobei die Ausgangs-Schaltung der Einheit in dem Wartemodus ein Signal erzeugt, welches als ausgangsseitiges Signal am Steuerausgang der Einheit an den Steuereingang der in der Reihe der miteinander verbundenen Einheiten nächsten Einheit als Freigabesignal gesendet wird, wodurch die in der Reihe nächste Einheit in den Zuweisungsmodus geschalten wird. Wie zuvor beschrieben, kann der Wartemodus auch wieder dem Adressiermodus entsprechen, wobei eine erneute Adressierung der Einheit vorzugsweise von der Sperrschaltung verhindert wird, welche erst zurückgesetzt wird, wenn das Verfahren vollständig neu gestartet wird, so dass während eines Durchlaufs des Verfahrens zur Adressierung der Einheiten jede Einheit nur einmal adressiert werden kann.
e. Wiederholen der Schritte Zuweisen einer Adresse und Schalten der Einheit nach dem Speichern der Adresse von dem Zuweisungsmodus in den Wartemodus bzw. der Schritte c. und d. für jede Einheit, bis sich alle Einheiten der Vielzahl von Einheiten im Wartemodus befinden.
f. Schalten der Einheiten vom Wartemodus in den Betriebsmodus. Dass alle Einheiten sich im Wartemodus befinden, kann auf unterschiedliche Weisen erfasst werden. Zunächst ist möglich, dass die letzte Einheit der Reihe bzw. der Steuerausgang der letzten Einheit mit dem Master verbunden ist, so dass der Master bei Empfang eines Freigabesignals von der letzten Einheit der Reihe über die letzte Steuerleitung bzw. die Rückmeldeleitung weiß, dass alle Einheiten adressiert wurden. Alternativ sind die Adressen, welche den Einheiten zugewiesen werden, gemäß einer Liste im Master hinterlegt, so dass der Master nach der Zuweisung der letzten hinterlegten Adresse weiß, dass allen Einheiten eine neue Adresse zugewiesen wurden bzw. sich im Wartemodus befeinden und in den Betriebsmodus geschalten werden können. Zudem sind weitere Bedingungen, wie beispielsweise ein Time-out, möglich, welche zu einem Schalten vom Wartemodus in den Betriebsmodus führen können.

Wird optional eine Zuweisungs-Adresse verwendet, kann ferner ein zusätzlicher Time-out vorgesehen sein. Erfolgt nach der Übermittlung der neuen Adresse an die Zuweisungs-Adresse keine Rückantwort der zu adressierenden Einheit, kann anhand des Time-out das Ende der Adressierung erkannt und der Adressierungsvorgang abgebrochen werden.

Das vorgeschlagene Verfahren ermöglicht eine Vergabe eindeutiger Adressen in der Reihenfolge der Verkabelung, wobei die Adressen willkürlich gewählt werden können. Entsprechend können Adressen flexibel vergeben werden, da anders als bei sogenannten Schieberegisterverfahren die Adressen nicht Auf- oder Absteigend vergeben werden müssen.

Gegenüber anderen Verfahren, welche vollständig auf einer eindeutigen Identifikationsnummer, wie beispielswiese einer Seriennummer, basieren, ist vorteilhaft, dass die Einheiten der Reihe nach und nicht entsprechend einer solchen Identifikationsnummer adressiert werden können, so dass nicht der gesamte Bereich möglicher Identifikationsnummern "durchsucht" werden muss, um alle vorhandenen Einheiten zu finden.

Ferner ist von Vorteil, dass den Einheiten, wenn der Kabelverlauf bekannt ist, bei dem vorgeschlagenen Verfahren nebst einer Einheiten-Adresse auch automatisch bzw. implizit ein Ort (Position der Einheit nach Kabelplan) zugewiesen wird. Die Einheiten-Adresse hat damit automatisch einen Ortsbezug.

Zwar sind Verfahren bzw. zugehörige Einheiten bekannt, welche ebenfalls Steuerleitungen zwischen den Einheiten verwenden, hierbei sind jedoch oftmals mehrere Steuerleitungen zwischen den Einheiten nötig oder es muss zwingend ein Befehl an die adressierte Einheit geschickt werden, um ein Signal vom Steuereingang auf den Steuerausgang durchzuschleifen, wofür zwingend Relais verbaut sein müssen und ausgangsseitig auch immer nur das eingangsseitige Signal anliegen kann.

Das Verfahren sieht zudem vorzugsweise vor, dass zum Schalten der Einheiten von dem Betriebsmodus in den Adressiermodus ein Bussignal von dem Master über die Busleitung an alle Einheiten übermittelt wird. Die Übermittlung wird weiter vorzugsweise durch Senden eines an die Broadcast-Adresse gerichteten Adressierbefehls vom Master über die Busleitung an alle Einheiten übermittelt.

Die Einheit wird zudem vorzugsweise nach dem Zuweisen der Adresse bzw. dem Speichern der Adresse in dem Adressspeicher automatisch oder durch Übermittlung eines Bussignals von dem Master an die Einheit in den Wartemodus geschaltet. Das Bussignal bzw. die Nachricht kann hierbei an die Broadcast-Adresse, die Zuweisungs-Adresse oder an die neu zugewiesene Adresse adressiert sein, wobei die Einheit entsprechend ausgebildet ist, die Nachricht anzunehmen und den darin enthaltenen Befehl zu verarbeiten. Zur Vereinfachung des Verfahrens ist die automatische Schaltung oder die Schaltung nach Übermittlung eines entsprechenden Befehls an die Broadcast-Adresse vorteilhaft.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

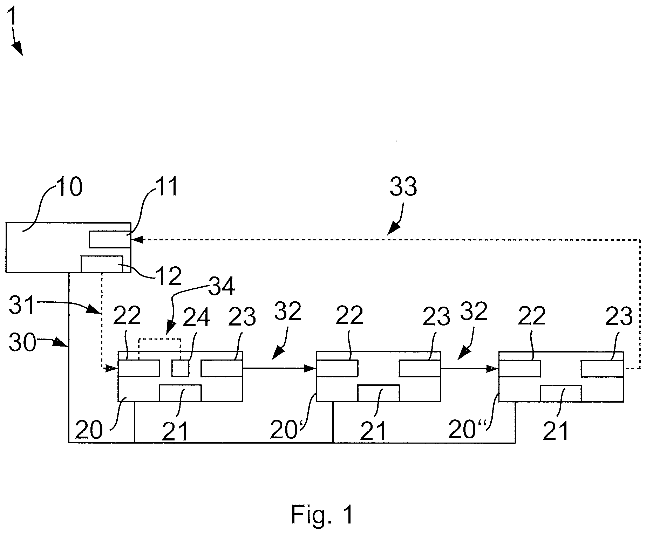

- Fig. 1: eine beispielhaft schematische Darstellung eines Master-Slave-Bussystems.

Jede Einheit 20, 20', 20" des in Figur 1 dargestellten Master-Slave-Bussystems 1 besitzt jeweils einen Steuereingang 22 sowie einen Steuerausgang 23. Der Steuerausgang 23 der ersten Einheit 20 ist mit dem Steuereingang 22 der zweiten Einheit 20' verbunden und der Steuerausgang 23 der zweiten Einheit 20' ist mit dem Steuereingang 22 der dritten und hier letzten Einheit 20" verbunden. Der Steuerausgang 23 der letzten Einheit 20" kann optional über eine hier gestrichelt dargestellte letzte Steuerleitung 33, welche auch als Rückmeldeleitung bezeichnet werden kann, mit einem Steuereingang 11 des Masters 10 verbunden sein, um dem Master 10 das Ende der Adressierungsvorganges zu melden, was durch die Übermittlung eines Freigabesignals von der letzten Einheit 20" an den Master 10 realisiert ist. Ferner weist jede der Einheiten 20, 20', 20" eine durch einen Mikrocontroller realisierte übergeordnete Steuerlogik 21 auf, welche ausgebildet ist, die durch die Eingangs-Schaltung verarbeiteten eingangsseitigen Signale zu verwerten bzw. zu verarbeiten und die Ausgangs-Schaltung zur Erzeugung des ausgangsseitigen Signals zu steuern. Da die Einheiten 20, 20', 20" als Slaves eines Master-Slave-Bussystems 1 vorgesehen sind, werden diese im Weiteren auch als Slave-Einheiten oder Slaves bezeichnet.

Zu Beginn des erfindungsgemäßen Verfahrens sind die Slaves 20, 20', 20" nicht korrekt adressiert bzw. unadressiert und besitzen alle dieselben, falsche oder unbekannte individuelle Einheiten-Adressen sowie eine vorbestimmte und vorzugsweise unveränderliche Broadcast-Adresse.

Eine vom Master 10 an die Broadcast-Adresse übermittelte Nachricht wird von allen Slaves 20, 20', 20" empfangen bzw. verarbeitet, führen jedoch nicht zu einer Rückantwort der Slaves 20, 20', 20".

Für die korrekte Funktionsweise des Master-Slave-Bussystems 1 muss jede Slave-Einheit 20, 20', 20" über eine innerhalb des Bussystems einmalige Einheiten-Adresse verfügen, so dass eine Kommunikationsaufforderung durch den Master 10 bzw. eine vom Master 10 über die Busleitung 30 übermittelte Nachricht nur von einem Slave 20, 20', 20" bearbeitet und beantwortet wird.

Entsprechend ist eine schnelle und möglichst unkomplizierte Adresszuweisung erforderlich, damit über das Bussystem kommuniziert werden kann.

Zunächst werden die Slaves 20, 20', 20" durch einen an die Broadcast-Adresse gerichteten Befehl von ihrem normalen Betriebsmodus in den Adressiermodus geschalten.

Zum Starten der Adressierung bzw. zum Starten der Zuweisung der Adressen, wird der initiale und hier erste Slave 20 in der Reihe der miteinander durch die Steuerleitung 32 verbundenen Slaves 20, 20', 20" an seinem Steuereingang 22 mit einem Freigabesignal beaufschlagt, welches den ersten Slave 20 der Reihe zur Adressierung freigibt.

Bei dem in Figur 1 gezeigten Ausführungsbeispiel ist das Freigabesignal für den ersten Slave 20 beispielsweise über eine erste Steuerleitung 31 vom Master 10 bzw. von einem Steuerausgang 12 des Masters 10 zum ersten Slave 20 übermittelbar. Alternativ kann das Freigabesignal auch ein Spannungssignal sein, wobei der Steuereingang 22 über eine Brücke 34 oder ein dazwischen geschaltetes Steuerelement zur Bereitstellung des Spannungssignals mit der Spannungsversorgung 24 verbunden wird. Die Spannungsversorgung kann entweder eine konstante oder variable Spannungsversorgung am Slave selbst sein (z.B. eine zur Potentiometer Speisung vorhandene +10V Spannung) oder eine über das Bussystem programmierbare variable Spannungsversorgung (z.B. variable DC Spannung 0 - 24V) oder eine vom Master 10 bereitgestellte Spannung. Dieses Freigabesignal kann, wie über die erste Steuerleitung 31 dargestellt, z.B. direkt am Master 10 schaltbar ausgeführt werden, womit der Master 10 bei einer entsprechenden Ausführung den Start für das Verfahren initiieren kann.

Werden die Slaves 20, 20', 20" durch einen an die Broadcast-Adresse gerichteten Befehl in den Adressiermodus geschalten, wird an ihrem Steuerausgang 23 ein Sperrsignal erzeugt, welches z. B. eine vorbestimmte Spannung zwischen 0-10V sein kann.

Eine in den Slaves 20, 20', 20" jeweils vorhandene Sperrschaltung führt dazu, dass die sich im Adressiermodus befindenden Slaves 20, 20', 20" über ein an ihrem jeweiligen Steuereingang 22 anliegendes Freigabesignal nur dann in den Zuweisungsmodus geschalten werden können, wenn bzw. solange an ihrem Steuerausgang 23 das Sperrsignal gesendet wird. Umgekehrt ergibt sich daraus, dass die Slave-Einheiten 20, 20', 20" jeweils nicht in Zuweisungsmodus geschalten werden können, wenn an ihrem jeweiligen Steuerausgang 23 ein Freigabesignal erzeugt bzw. gesendet wird.

Befinden sich die Slaves 20, 20', 20" im Adressiermodus können sie jeweils durch ein an ihrem jeweiligen Steuereingang 22 empfangenes Freigabesignal in den Zuweisungsmodus geschalten werden, in welchem eine über die Busschnittstelle empfangene Adresse in dem jeweiligen Slave gespeichert wird.

Nach der Zuweisung der neuen Einheiten-Adresse erfolgt das Erzeugen des Freigabesignals von beispielsweise 10V für den entlang der Reihe nächsten Slave 20', 20", wodurch dieser in den Zuweisungsmodus geschalten wird.

Optional kann die erfolgreiche Adressierung kontrolliert werden, indem z.B. ein Rücklesen der Slave-Adresse aus dem Adressspeicher der jeweiligen Slave-Einheit 20, 20', 20" erfolgt, welche im Zuweisungsmodus über die dafür vorgesehene Zuweisungs-Adresse oder über die ihr zugewiesene Einheiten-Adresse über das Bussystem erreichbar ist.

Ist vorgesehen, dass ein sich im Zuweisungsmodus befindender Slave 20, 20', 20" durch einen Befehl an eine optionale Zuweisungs-Adresse mit einer neuen Einheiten-Adresse adressiert wird, spricht der Master 10 einen sich jeweils im Zuweisungsmodus befindenden Slave 20, 20', 20"durch Adressierung einer Nachricht an die genannte Zuweisungs-Adresse an, welcher bei Empfang des Befehls die Zuweisung der Adresse ausführt und dem Master antwortet.

Wenn keine weitere zur Adressierung freigegebene bzw. sich im Zuweisungsmodus befindende Slave-Einheit 20, 20', 20" mehr gefunden wird, ist die Adressierung abgeschlossen.

Optional kann bei Erreichen einer bestimmten Anzahl von zu adressierenden Slave-Einheiten 20, 20', 20" das Verfahren beendet werden.

Weiter kann optional ein Beenden des Verfahrens erfolgen, wenn der Master 10 das Freigabesignal durch die letzte Steuerleitung 33 von dem Steuerausgang des letzten Slaves an einem Steuereingang 11 des Masters 10 erhält. Wenn allen Slaves 20, 20', 20" eine Adresse zugewiesen wurde, also eine der Bedingungen zum Beenden des Verfahrens erfüllt sind, werden die Slaves 20, 20', 20" von dem Adressiermodus in ihren Betriebsmodus geschalten, was mittels einer Nachricht des Masters 10 an die Broadcast-Adressen oder an die einzelnen neu vergebenen Adressen initiiert werden kann.

## Patentansprüche

1. Einheit (20, 20', 20") für ein Bussystem (1) aufweisend:
eine Busschnittstelle;
einen Steuereingang (22) zum Empfang eines eingangsseitigen Signals und einen Steuerausgang (23) zum Senden eines ausgangsseitigen Signals;
wobei der Steuereingang (22) mit einer Eingangs-Schaltung zur Verarbeitung des eingangsseitigen Signals und der Steuerausgang (23) mit einer Ausgangs-Schaltung zur Erzeugung des ausgangsseitigen Signals verbunden ist;
einen Adressspeicher, welcher ausgebildet ist, eine kollektive Broadcast-Adresse und eine individuelle Einheiten-Adresse zu speichern;
und wobei die Ausgangs-Schaltung ausgebildet ist, das an dem Steuerausgang (23) anliegende Signal aus einer Versorgungsspannung der Einheit (20, 20', 20") oder aus einer externen Spannung zu erzeugen
wobei die Einheit eine Slave-Einheit eines Master-Slave-Bussystems und die Einheiten-Adresse eine Slave-Adresse ist,
und wobei die Einheit **dadurch gekennzeichnet ist, dass** sie ferner ausgebildet ist,
bei Empfang eines an die Broadcast-Adresse gerichteten Adressierbefehls über die Busschnittstelle oder eines anderen Signals aus einem Betriebsmodus in einen Adressiermodus zu schalten,
in dem Adressiermodus mit der Ausgangs-Schaltung ein Sperrsignal zu erzeugen und das Sperrsignal an dem Steuerausgang (23) als ausgangsseitiges Signal zu senden sowie bei Empfang eines Freigabesignals an dem Steuereingang (22) aus dem Adressiermodus in einen Zuweisungsmodus zu schalten,
in dem Zuweisungsmodus eine über die Busschnittstelle empfangene Adresse als individuelle Einheiten-Adresse in dem Adressspeicher zu speichern und nach Speicherung der Einheiten-Adresse aus dem Zuweisungsmodus in einen Wartemodus zu schalten,
in dem Wartemodus mit der Ausgangs-Schaltung ein Freigabesignal zu erzeugen und das Freigabesignal an dem Steuerausgang (23) als ausgangsseitiges Signal zu senden.

2. Einheit nach Anspruch 1,
wobei der Adressspeicher ausgebildet ist, die kollektive Broadcast-Adresse, die individuelle Einheiten-Adresse und eine kollektive Zuweisungs-Adresse zu speichern.

3. Einheit nach einem der vorhergehenden Ansprüche,
wobei die Eingangs-Schaltung und die Ausgangs-Schaltung sowie der Steuereingang (22) und der Steuerausgang (23) schaltungstechnisch voneinander getrennt und/oder nur durch eine übergeordnete Steuerungslogik (21) der Einheit (20, 20', 20") miteinander verbunden sind.

4. Einheit nach einem der vorhergehenden Ansprüche,
wobei der Steuereingang (22) ein Digital-Eingang ist und die Eingangs-Schaltung ausgebildet ist, ein an dem Steuereingang (22) anliegendes digitales Signal zu verarbeiten
oder wobei der Steuereingang (22) ein Analog-Eingang ist und die Eingangs-Schaltung ausgebildet ist, ein an dem Steuereingang (22) anliegendes analoges Signal zu verarbeiten.

5. Einheit nach einem der vorhergehenden Ansprüche,
wobei der Steuerausgang (23) ein Digital-Ausgang ist und die Ausgangs-Schaltung ausgebildet ist, ein an dem Steuerausgang (23) anliegendes digitales Signal zu erzeugen
oder wobei der Steuerausgang (23) ein Analog-Ausgang ist und die Ausgangs-Schaltung ausgebildet ist, ein an dem Steuerausgang (23) anliegendes analoges Signal zu erzeugen
oder wobei der Steuerausgang (23) ein offener Kollektor ist und die Ausgangs-Schaltung ausgebildet ist, ein an dem Steuerausgang (23) anliegendes digitales Signal zu erzeugen.

6. Einheit nach einem der vorhergehenden Ansprüche,
ferner aufweisend einen Spannungsausgang (24), welcher unmittelbar mit dem Steuereingang (22) verbindbar ist
oder ferner aufweisend einen Spannungsausgang (24), welcher über ein Potentiometer oder über einen Schalter mit dem Steuereingang (22) verbindbar oder verbunden ist.

7. Einheit nach einem der vorhergehenden Ansprüche,
ferner aufweisend eine Sperrschaltung,
wobei die Einheit (20, 20', 20") durch die Sperrschaltung ausgebildet ist,
nur in den Zuweisungsmodus schaltbar zu sein, wenn der Steuerausgang (23) das Sperrsignal sendet und an dem Steuereingang (22) das Freigabesignal anliegt.

8. Master-Slave-Bussystem (1) mit einem Master (10) und einer Vielzahl von Einheiten (20, 20', 20") nach einem der vorhergehenden Ansprüche als Slave-Einheiten,
wobei der Master (10) durch zumindest eine Busleitung (30) mit den Einheiten (20, 20', 20") der Vielzahl von Einheiten (20, 20', 20") verbunden ist
und wobei jeweils zwei Einheiten (20, 20', 20") der Vielzahl von Einheiten (20, 20', 20") miteinander durch eine Steuerleitung (32) verbunden sind, welche den Steuerausgang (23) einer ersten Einheit (20, 20', 20") mit dem Steuereingang (22) einer zweiten Einheit (20, 20', 20") verbindet, so dass die Einheiten (20, 20', 20") der Vielzahl von Einheiten (20, 20', 20") durch die jeweiligen Steuerleitungen miteinander in Reihe verbunden sind.

9. Master-Slave-Bussystem nach dem vorhergehenden Anspruch,
wobei der Steuerausgang (23) einer letzten Einheit (20") der in Reihe der miteinander verbundenen Einheiten (20, 20', 20")mit dem Master (10) durch eine letzte Steuerleitung (33) verbunden ist.

10. Master-Slave-Bussystem nach einem der vorhergehenden Ansprüche 8 oder 9,
wobei der Master (10) mit dem Steuereingang (22) einer ersten Einheit (20) der in Reihe der miteinander verbundenen Einheiten (20, 20', 20")durch eine erste Steuerleitung (31) verbunden ist.

11. Verfahren zur Adressierung einer Vielzahl von Einheiten (20, 20', 20"), welche über zumindest eine Busleitung (30) mit einem Master (10) zu einem Bussystem (1) verbunden sind,
wobei jede Einheiten (20, 20', 20") der Vielzahl von Einheiten (20, 20', 20") jeweils eine Busschnittstelle zur Verbindung mit der Busleitung (30), einen Steuereingang (22) zum Empfang eines eingangsseitigen Signals und einen Steuerausgang (23) zum Senden eines ausgangsseitigen Signals aufweist,
wobei der Steuereingang (22) mit einer Eingangs-Schaltung zur Verarbeitung des eingangsseitigen Signals und der Steuerausgang (23) mit einer Ausgangs-Schaltung zur Erzeugung des ausgangsseitigen Signals verbunden ist,
wobei jede Einheit (20, 20', 20") ferner einen Adressspeicher aufweist, welcher ausgebildet ist, eine kollektive Broadcast-Adresse und eine individuelle Einheiten-Adresse zu speichern,
und wobei jeweils zwei Einheiten (20, 20', 20") der Vielzahl von Einheiten (20, 20', 20") miteinander durch eine Steuerleitung (32) verbunden sind, welche den Steuerausgang (23) einer ersten Einheit mit dem Steuereingang (22) einer zweiten Einheit verbindet, so dass alle Einheiten (20, 20', 20") der Vielzahl von Einheiten (20, 20', 20") durch die jeweiligen Steuerleitungen (32) von einer initialen, vorzugsweise ersten Einheit (20) zu einer letzten Einheit (20") miteinander in Reihe verbunden sind,
und wobei das Verfahren durch die folgenden Schritte gekennzeichnet ist:
a. Schalten der Einheiten (20, 20', 20") von einem Betriebsmodus in einen Adressiermodus,
wobei die Einheiten (20, 20', 20") in dem Adressiermodus mit der Ausgangs-Schaltung ein Sperrsignal erzeugen und das Sperrsignal an dem Steuerausgang (23) als ausgangsseitiges Signal senden, so dass das Sperrsignal an dem Steuereingang (22) der in der Reihe nachfolgenden Einheit (20', 20") anliegt;
b. Schalten der ersten Einheit (20) der in Reihe geschalteten Einheiten (20, 20', 20") von dem Adressiermodus in einen Zuweisungsmodus durch Übermittlung eines Freigabesignals an den Steuereingang (22) der in der Reihe initialen Einheit (20);
c. Zuweisen einer Adresse zu dem sich im Zuweisungsmodus befindenden Einheit(20, 20', 20"), durch Übermittlung einer Adresse an die Einheit (20, 20', 20") über die Busleitung (30) und Speichern der Adresse als individuelle Einheiten-Adresse in dem Adressspeicher;
d. Schalten der Einheit (20, 20', 20") nach dem Speichern der Adresse von dem Zuweisungsmodus in einen Wartemodus,
wobei die Ausgangs-Schaltung der Einheit (20, 20', 20") in dem Wartemodus ein Signal erzeugt, welches als ausgangsseitiges Signal am Steuerausgang (23) der Einheit (20, 20', 20") an den Steuereingang (22) der in der Reihe der miteinander verbundenen Einheiten (20, 20', 20") nächsten Einheit als Freigabesignal gesendet wird, wodurch die in der Reihe nächste Einheit in den Zuweisungsmodus geschalten wird;
e. Wiederholen der Schritte c. und d. für jede Einheit (20', 20"), bis sich alle Einheiten (20, 20', 20") der Vielzahl von Einheiten im Wartemodus befinden;
f. Schalten der Einheiten (20, 20', 20") vom Wartemodus in den Betriebsmodus.

12. Verfahren nach dem vorhergehenden Anspruch,
wobei zum Schalten der Einheiten (20, 20', 20") von dem Betriebsmodus in den Adressiermodus ein Bussignal von dem Master (10) über die Busleitung (30) an alle Einheiten (20, 20', 20") übermittelt wird.

13. Verfahren nach einem der vorhergehenden Ansprüche 11 oder 12,
wobei die Einheiten (20, 20', 20") nach dem Zuweisen der Adresse automatisch oder durch Übermittlung eines Bussignals von dem Master (10) an die Einheit (20, 20', 20") in den Wartemodus geschalten wird.

## Claims

1. A unit (20, 20', 20") for a bus system (1), having
a bus interface;
a control inlet (22) for receiving an inlet-side signal and a control outlet (23) for sending an outlet-side signal;
wherein the control inlet (22) is connected to an inlet circuit for processing the inlet-side signal and the control outlet (23) is connected to an outlet circuit for generating the outlet-side signal;
an address memory which is formed to store a collective broadcast address and an individual unit address;
and wherein the outlet circuit is formed to generate the signal applied to the signal outlet (23) from a supply voltage of the unit (20, 20', 20") or from an external voltage,
wherein the unit is a slave unit of a master slave bus system and the unit address is a slave address,
and wherein the unit is **characterised in that** it is further formed
to switch to an addressing mode from an operating mode upon receipt of an addressing command directed to the broadcast address via the bus interface or another signal,
to generate a blocking signal with the outlet circuit in the addressing mode and to send the blocking signal to the control outlet (23) as an outlet-side signal and to switch from the addressing mode to an assignment mode upon receipt of a release signal at the control inlet (22),
to store an address received via the bus interface as an individual unit address in the address memory in the assignment mode and to switch from the assignment mode to a waiting mode after storing the unit address,
to generate a release signal with the outlet circuit in the waiting mode and to send the release signal as an outlet-side signal at the control outlet (23).

2. The unit according to claim 1,
wherein the address memory is formed to store the collective broadcast address, the individual unit address and a collective assignment address.

3. The unit according to any one of the preceding claims,
wherein the inlet circuit and the outlet circuit as well as the control inlet (22) and the control outlet (23) are separated from one another in terms of circuitry and/or are only connected to one another via a superordinate control logic (21) of the unit (20, 20', 20").

4. The unit according to any one of the preceding claims,
wherein the control inlet (22) is a digital inlet and the inlet circuit is formed to process a digital signal applied to the control inlet (22),
or wherein the control inlet (22) is an analogous inlet and the inlet circuit is formed to process an analogous signal applied to the control inlet (22).

5. The unit according to any one of the preceding claims,
wherein the control outlet (23) is a digital outlet and the outlet circuit is formed to generate a digital signal applied to the control outlet (23),
or wherein the control outlet (23) is an analogous outlet and the outlet circuit is formed to generate an analogous signal applied to the control outlet (23),
or wherein the control outlet (23) is an open collector and the outlet circuit is formed to generate a digital signal applied to the control outlet (23).

6. The unit according to any one of the preceding claims,
further comprising a voltage outlet (24) which can be directly connected to the control inlet (22),
or further having a voltage outlet (24) which can be connected or is connected to the control inlet (22) via a potentiometer or via a switch.

7. The unit according to any one of the preceding claims,
further having a blocking circuit,
wherein the unit (20, 20', 20") is formed by the control circuit
to be only switchable to the assignment mode when the control outlet (23) sends the blocking signal and the release signal is applied to the control inlet (22).

8. A master slave bus system (1) with a master (10) and a plurality of units (20, 20', 20") according to any one of the preceding claims as slave units,
wherein the master (10) is connected to the units (20, 20', 20") of the plurality of units (20, 20', 20") through at least one bus line (30),
and wherein two respective units (20, 20', 20") of the plurality of units (20, 20', 20") are connected to one another via a control line (32) which connects the control outlet (23) of a first unit (20, 20', 20") to the control inlet (22) of a second unit (20, 20', 20") so that the units (20, 20', 20") of the plurality of units (20, 20', 20") are connected to one another in series through the respective control lines.

9. The master slave bus system according to the preceding claim,
wherein the control outlet (23) of a last unit (20") of the units (20, 20', 20") connected to one another in series is connected to the master (10) through a last control line (33).

10. The master slave bus system according to any one of the preceding claims 8 or 9,
wherein the master (10) is connected to the control inlet (22) of a first unit (20) of the units (20, 20', 20") connected to one another in series through a first control line (31).

11. A method for addressing a plurality of units (20, 20', 20") which are connected to a master (10) and into a bus system (1) via at least one bus line (30),
wherein all units (20, 20', 20") of the plurality of units (20, 20', 20") each have a bus interface for connection to the bus line (30), a control inlet (22) for receipt of an inlet-side signal and a control outlet (23) for sending an outlet-side signal,
wherein the control inlet (22) is connected to an inlet circuit for processing the inlet-side signal and the control outlet (23) is connected to an outlet circuit for generating the outlet-side signal,
wherein every unit (20, 20', 20") further has an address memory which is formed to store a collective broadcast address and an individual unit address,
and wherein two respective units (20, 20', 20") of the plurality of units (20, 20', 20") are connected to one another through a control line (32) which connects the control outlet (23) of a first unit to the control inlet (22) of a second unit so that all units (20, 20', 20") of the plurality of units (20, 20', 20") are connected to one another in series through the respective control lines (32) from an initial, preferably first unit (20) to a last unit (20"),
and wherein the method is **characterised by** the following steps:
a. switching the units (20, 20', 20") from an operating mode to an addressing mode,
wherein the units (20, 20', 20") generate a blocking signal with the outlet circuit in the addressing mode and send the blocking signal at the control outlet (23) as an outlet-side signal so that the blocking signal is applied to the control inlet (22) of the unit (20', 20") following in the series;
b. switching the first unit (20) of the units (20, 20', 20") connected in series from the addressing mode to an assignment mode through transmission of a release signal to the control inlet (22) of the initial unit (20) in the series;
c. assigning an address to the unit (20, 20', 20") in the assignment mode through transmission of an address to the unit (20, 20', 20") via the bus line (30) and storing the address as an individual unit address in the address memory;
d. switching the units (20, 20', 20") from the assignment mode to a waiting mode after storing the address,
wherein the outlet circuit of the unit (20, 20', 20") generates a signal in the waiting mode which is sent as an outlet-side signal at the control outlet (23) of the unit (20, 20', 20") to the control inlet (22) of the next unit of the units (20, 20', 20") connected in series to one another as a release signal, whereby the next unit in the series is switched to the assignment mode;
e. repeating the steps c. and d. for every unit (20', 20") until all units (20, 20', 20") of the plurality of units are in the waiting mode;
f. switching the units (20, 20', 20") from the waiting mode to the operating mode.

12. The method according to the preceding claim,
wherein a bus signal is transmitted from the master (10) to all units (20, 20', 20") via the bus line (30) for switching the units (20, 20', 20") from the operating mode to the addressing mode.

13. The method according to any one of the preceding claims 11 or 12,
wherein the units (20, 20', 20") are switched to the waiting mode automatically after assigning the address or through transmission of a bus signal from the master (10) to the units (20, 20', 20").

## Revendications

1. Unité (20, 20', 20") pour un système de bus (1) présentant :
une interface de bus ;
une entrée de commande (22) pour recevoir un signal côté entrée et une sortie de commande (23) pour émettre un signal côté sortie ;
dans laquelle l'entrée de commande (22) est reliée à un circuit d'entrée pour traiter le signal côté entrée et la sortie de commande (23) est reliée à un circuit de sortie pour générer le signal côté sortie ;
une mémoire d'adresses qui est réalisée pour mémoriser une adresse de diffusion collective et une adresse d'unité individuelle ;
et dans laquelle le circuit de sortie est réalisé pour générer le signal appliqué à la sortie de commande (23) à partir d'une tension d'alimentation de l'unité (20, 20', 20") ou à partir d'une tension externe,
dans laquelle l'unité est une unité esclave d'un système de bus maître/esclave et l'adresse d'unité est une adresse esclave,
et dans laquelle l'unité est **caractérisée en ce qu'**elle est en outre réalisée
pour commuter d'un mode opérationnel à un mode d'adressage lorsqu'une instruction d'adressage dirigée à l'adresse de diffusion par l'intermédiaire de l'interface de bus ou un autre signal est reçu(e),
dans le mode d'adressage, pour générer un signal de blocage à l'aide du circuit de sortie, et pour émettre le signal de blocage à la sortie de commande (23) en tant que signal côté sortie, et pour commuter d'un mode d'adressage à un mode d'attribution lorsqu'un signal de déblocage est reçu à l'entrée de commande (22),
dans le mode d'attribution, pour mémoriser une adresse reçue par l'intermédiaire de l'interface de bus en tant qu'adresse d'unité individuelle dans la mémoire d'adresses, et pour commuter du mode d'attribution à un mode d'attente après la mémorisation de l'adresse d'unité,
dans le mode d'attente, pour générer par le circuit de sortie un signal de déblocage et pour émettre le signal de déblocage à la sortie de commande (23) en tant que signal côté sortie.

2. Unité selon la revendication 1,
dans laquelle la mémoire d'adresses est réalisée pour mémoriser l'adresse de diffusion collective, l'adresse d'unité individuelle et une adresse d'attribution collective.

3. Unité selon l'une quelconque des revendications précédentes,
dans laquelle le circuit d'entrée et le circuit de sortie ainsi que l'entrée de commande (22) et la sortie de commande (23) sont séparés les uns des autres en matière de circuit, et/ou ne sont reliés les uns aux autres que par une logique de commande (21) de niveau supérieur de l'unité (20, 20', 20").

4. Unité selon l'une quelconque des revendications précédentes,
dans laquelle l'entrée de commande (22) est une entrée numérique et le circuit d'entrée est réalisé pour traiter un signal numérique appliqué à l'entrée de commande (22),
ou dans laquelle l'entrée de commande (22) est une entrée analogique et le circuit d'entrée est réalisé pour traiter un signal analogique appliqué à l'entrée de commande (22).

5. Unité selon l'une quelconque des revendications précédentes,
dans laquelle la sortie de commande (23) est une sortie numérique et le circuit de sortie est réalisé pour générer un signal numérique appliqué à la sortie de commande (23),
ou dans laquelle la sortie de commande (23) est une sortie analogique, et le circuit de sortie est réalisé pour générer un signal analogique appliqué à la sortie de commande (23),
ou dans laquelle la sortie de commande (23) est un collecteur ouvert, et le circuit de sortie est réalisé pour générer un signal numérique appliqué à la sortie de commande (23).

6. Unité selon l'une quelconque des revendications précédentes,
présentant en outre une sortie de tension (24) qui peut être reliée directement à l'entrée de commande (22),
ou présentant en outre une sortie de tension (24) qui peut être reliée ou est reliée à l'entrée de commande (22) par un potentiomètre ou par un commutateur.

7. Unité selon l'une quelconque des revendications précédentes,
présentant en outre un circuit de blocage,
dans laquelle l'unité (20, 20', 20") est réalisée par le circuit
de blocage afin de n'être commutable que dans le mode d'attribution lorsque la sortie de commande (23) émet le signal de blocage et si le signal de déblocage est appliqué à l'entrée de commande (22).

8. Système de bus maître/esclave (1), comprenant un maître (10) et une pluralité d'unités (20, 20', 20") selon l'une quelconque des revendications précédentes comme unités esclaves,
dans lequel le maître (10) est relié par au moins une ligne de bus (30) aux unités (20, 20', 20") de la pluralité d'unités (20, 20', 20"),
et dans lequel respectivement deux unités (20, 20', 20") de la pluralité d'unités (20, 20', 20") sont reliées ensemble par une ligne de commande (32) qui relie la sortie de commande (23) d'une première unité (20, 20', 20") à l'entrée de commande (22) d'une deuxième unité (20, 20', 20") de sorte que les unités (20, 20', 20") de la pluralité d'unités (20, 20', 20") sont reliées ensemble en série par les lignes de commande respectives.

9. Système de bus maître/esclave selon la revendication précédente,
dans lequel la sortie de commande (23) d'une dernière unité (20") des unités (20, 20', 20") connectées ensemble en série est reliée au maître (10) par une dernière ligne de commande (33).

10. Système de bus maître/esclave selon l'une quelconque des revendications précédentes 8 ou 9,
dans lequel le maître (10) est relié par une première ligne de commande (31) à l'entrée de commande (22) d'une première unité (20) des unités (20, 20', 20") reliées ensemble en série.

11. Procédé permettant d'adresser une pluralité d'unités (20, 20', 20") qui sont reliées à un maître (10) par au moins une ligne de bus (30) pour former un système de bus (1),
dans lequel chaque unité (20, 20', 20") de la pluralité d'unités (20, 20', 20") présente respectivement une interface de bus pour être reliée à la ligne de bus (30), une entrée de commande (22) pour recevoir un signal côté entrée et une sortie de commande (23) pour émettre un signal côté sortie,
dans lequel l'entrée de commande (22) est reliée à un circuit d'entrée pour traiter le signal côté entrée, et la sortie de commande (23) est reliée à un circuit de sortie pour générer le signal côté sortie,
dans lequel chaque unité (20, 20', 20") présente en outre une mémoire d'adresses qui est réalisée pour mémoriser une adresse de diffusion collective et une adresse d'unité individuelle,
et dans lequel respectivement deux unités (20, 20', 20") de la pluralité d'unités (20, 20', 20") sont reliées ensemble par une ligne de commande (32) qui relie la sortie de commande (23) d'une première unité à l'entrée de commande (22) d'une deuxième unité de sorte que toutes les unités (20, 20', 20") de la pluralité d'unités (20, 20', 20") sont reliées en série par les lignes de commande (32) respectives d'une unité (20) initiale, de préférence la première, à une dernière unité (20"),
et dans lequel le procédé est **caractérisé par** les étapes suivantes consistant à :
a. commuter les unités (20, 20', 20") d'un mode opérationnel à un mode d'adressage,
dans lequel les unités (20, 20', 20") génèrent dans le mode d'adressage un signal de blocage par le circuit de sortie, et émettent le signal de blocage à la sortie de commande (23) en tant que signal côté sortie de sorte que le signal de blocage est appliqué à l'entrée de commande (22) de l'unité (20', 20") suivante dans la série ;
b. commuter la première unité (20) des unités (20, 20', 20") connectées en série du mode d'adressage à un mode d'attribution par la transmission d'un signal de déblocage à l'entrée de commande (22) de l'unité (20) initiale dans la série ;
c. attribuer une adresse à l'unité (20, 20', 20") se trouvant dans le mode d'attribution par la transmission d'une adresse à l'unité (20, 20', 20") par l'intermédiaire de la ligne de bus (30), et mémoriser l'adresse en tant qu'adresse d'unité individuelle dans la mémoire d'adresses ;
d. commuter l'unité (20, 20', 20") du mode d'attribution à un mode d'attente après la mémorisation de l'adresse,
dans lequel le circuit de sortie de l'unité (20, 20', 20") génère un signal dans le mode d'attente qui est émis en tant que signal côté sortie à l'entrée de commande (23) de l'unité (20, 20', 20") à l'entrée de commande (22) de l'unité la plus proche dans la série des unités (20, 20', 20") reliées ensemble en tant que signal de déblocage de sorte que l'unité la plus proche dans la série est commutée au mode d'attribution ;
e. répéter les étapes c) et d) pour chaque unité (20', 20") jusqu'à ce que toutes les unités (20, 20', 20") de la pluralité d'unités se trouvent dans le mode d'attente ;
f. commuter les unités (20, 20', 20") du mode d'attente au mode opérationnel.

12. Procédé selon la revendication précédente,
dans lequel un signal de bus est transmis du maître (10) par la ligne de bus (30) à toutes les unités (20, 20', 20") pour commuter les unités (20, 20', 20") du mode opérationnel au mode d'adressage.

13. Procédé selon l'une quelconque des revendications précédentes 11 ou 12,
dans lequel, après l'attribution de l'adresse, les unités (20, 20', 20") sont commutées au mode d'attente, automatiquement ou par la transmission d'un signal de bus du maître (10) à l'unité (20, 20', 20").
